# EUROPEAN PATENT SPECIFICATION

(11) **EP 3 461 033 B1**
(45) Date of publication and mention of the grant of the patent: **22.04.2020**
(21) Application number: 17193203.1
(22) Date of filing: 26.09.2017
(51) Int. Cl.: H04B 10/114, H04B 10/116

(54) **DEVICE AND METHOD FOR ENABLING LIGHT COMMUNICATION OF DATA**
VORRICHTUNG UND VERFAHREN ZUR ERMÖGLICHUNG DER LICHTKOMMUNIKATION VON DATEN
DISPOSITIF ET PROCÉDÉ DE COMMUNICATION DE DONNÉES PAR LUMIÈRE

(43) Date of publication of application: 27.03.2019
(73) Proprietor: Vestel Elektronik Sanayi ve Ticaret A.S., 45030 Manisa (TR)
(72) Inventor: DÖNER, Çagdas, 45030 Manisa (TR)
(74) Representative: Flint, Adam

(56) References cited:
- WO-A1-2017/042093
- US-A- 2 651 771
- US-A- 2 993 997

## Description

### Technical Field

The present disclosure relates to a device and method for enabling light communication of data,

### Background

Various arrangements for transferring data from one device to another device are known. Some arrangements use a cabled or wired network connection, such as over a wired network using Ethernet or the like. Other arrangements use a wireless network connection such as WiFi or the like. Yet other arrangements use modulated visible light (in so-called visible light communication or VLC). However, not all devices have the necessary functionality or capability of wired or wireless connectivity or VLC, or the environment in which the device is used may mean that wired or wireless connectivity or VLC is not possible or suitable. In the case of VLC in particular, known systems require that the light source itself is controlled to modulate the light that is emitted by the light source, which is not always possible or practical.

Document WO2017042093 A discloses an external light modulator comprising a non-light emitting element and a controller. The non-light emitting element can let the light pass with a transmittance of two or more discrete levels in order to encode the data. It could use amplitude modulation and its surface may be segmented into a plurality of discrete areas, with the transmittance of each segment being individually variable. The controller controls the transmittance of the non-emitting element in order to modulate the light.

Document US2993997 A discloses a system for providing a visual indication of the range and proximity of two moving vehicles. One of the moving vehicles sends modulated light (e.g. visible light) to the other moving vehicle. The light may be modulated by shuttering the light with a perforated rotating disc. The light is modulated in order to be distinguished from the solar radiation or other sources of light.

Document US2651771 A discloses an angular motion detector and position indicator. A light source is reflected from a mirror which is carried by the instrument under test. The reflected light passes through a rotating disc shutter and reflected into a photo-cell. The rotating disc is driven by a constant speed motor. The phase of the light varies according to the mirror rotation and by passing through the rotating disc.

### Summary

According to a first aspect disclosed herein, there is provided a device for enabling light communication of data from a source device to a receiver device, the device comprising:
a rotor having at two least transparent regions through which light emitted by a light source can pass towards a receiver device, the transparent regions having at least one of a different size and a different shape, the remainder of the rotor being opaque; and
a drive arrangement for driving rotational movement of the rotor;
the device being arranged so that as the drive arrangement rotates the rotor, light emitted by a said light source is selectively blocked and selectively allowed to pass through the at two least transparent regions in accordance with the data to be communicated from a said source device to a said receiver device, whereby a first data character can be represented by light passing through one of the transparent regions and a second data character can be represented by light passing through the or another of the transparent regions having at least one of a different size and a different shape.

Examples of such devices avoid the need to control the light source itself to modulate the light that is emitted by the light source.

The opaque portion of the rotor does not have to completely block the light emitted by the light source. For example, it may be sufficient for the rotor to partially block the light. The amount or degree of blocking that is required may depend at least in part on the sensitivity of the light detector of the receiving device. Likewise, the difference in the size and/or shape of the transparent regions that is required may depend at least in part on the sensitivity of the light detector of the receiving device.

The light may be visible light. Light of other wavelengths may be used.

In an example, the device comprises exactly two transparent regions.

In an example, the two transparent regions are arranged on the rotor to be diametrically opposed to each other.

In an example, the device comprises a wireless communications interface for receiving signals from a source device wirelessly.

In an example, the device comprises a wired communications interface for receiving signals from a source device over a wired connection.

In an example, the device is arranged to receive from a said source device data to be communicated from a said source device to a receiver device, the device comprising a controller arranged to receive the data, to obtain a drive signal in accordance with the received data, and to control the drive arrangement in accordance with the drive signal.

In an example, the device is arranged to receive a drive signal from a source device in which the drive signal is modulated in accordance with the data to be sent, and to control the drive arrangement in accordance with the drive signal.

According to a second aspect disclosed herein, there is provided a method of communicating data from a source device to a receiver device, the method comprising:
rotating a rotor having at two least transparent regions through which light emitted by the light source can pass towards the receiver device, the transparent regions having at least one of a different size and a different shape for allowing different amounts of light to pass, the remainder of the rotor being opaque;
receiving at the receiver device light that has passed through the at two least transparent regions; and
decoding at the receiver device the light received at the receiver device, whereby a first data character is represented by light passing through one of the transparent regions and a second data character is represented by light passing through the or another of the transparent regions having at least one of a different size and a different shape.

In an example, the rotor comprises exactly two transparent regions.

In an example, the two transparent regions are arranged on the rotor to be diametrically opposed to each other.

In an example, the rotor is provided on a device having a controller for controlling rotation of the rotor.

In an example, the method comprises the source device transmitting to the controller the data to be communicated from the source device to the receiver device, the controller being arranged to receive the data, to obtain a drive signal in accordance with the received data, and to control the drive arrangement in accordance with the drive signal.

In an example, the device is arranged to receive a drive signal from the source device in which the drive signal is modulated in accordance with the data to be sent, and to control the drive arrangement in accordance with the drive signal.

### Brief Description of the Drawings

To assist understanding of the present disclosure and to show how embodiments may be put into effect, reference is made by way of example to the accompanying drawings in which:
Figure 1 shows schematically an example of a source device, a receiver device and a device for enabling light communication of data from the source device to the receiver device;
Figure 2 shows schematically a plan view of an example of a rotor of the enabling device of Figure 1; and
Figure 3 shows schematically the representation of data bits by the enabling device of Figures 1 and 2.

### Detailed Description

In broad terms, examples of embodiments of the present disclosure enable transfer of data from a source device to a receiver device using light in which the light source itself does not have to be controlled to modulate the light to transfer the data. The light source itself can therefore be simple and simply left "on" or switched "on" when required. Indeed, the light source may for example be the Sun in some examples, though a dedicated light source may be more appropriate in some applications.

Whilst reference is often made herein to a "source device" and a "receiver device", in some examples the same functionality may be provided for each of the devices, such that data can be transferred in both directions between the devices.

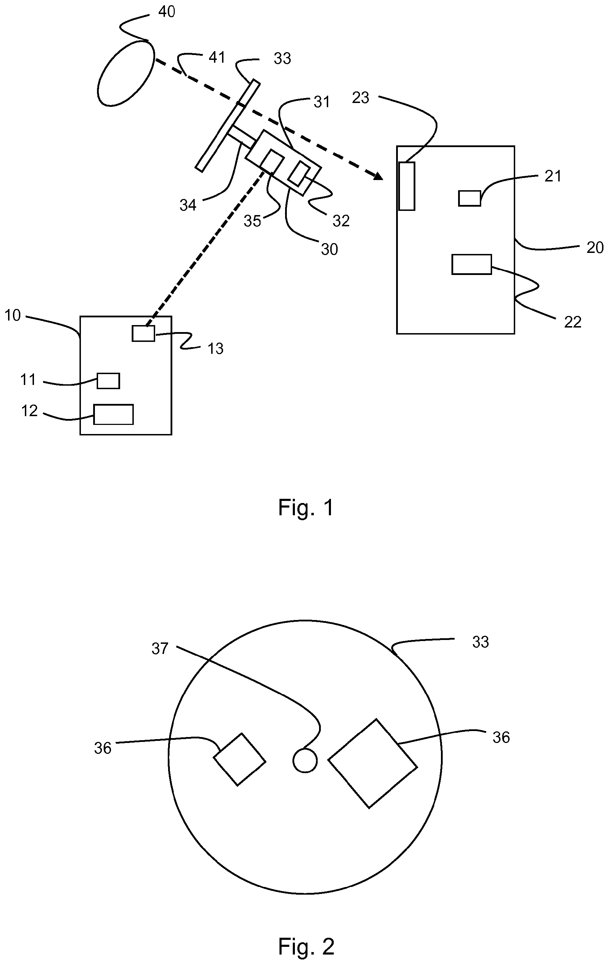

Referring now to Figure 1, there is shown examples of a source device 10, a receiver device 20 and a device 30 (hereafter the "enabling device") for enabling light communication of data from the source device 10 to the receiver device 20. A light source 40 is also shown, emitting light 41 at least towards the receiver device 20. The enabling device 30 is located between the light source 40 and the receiver device 20 so as to be able selectively to block and pass the light 41 emitted towards the receiver device 20, as will be discussed further below.

The enabling device 30 in this example is shown as a discrete device which is separate from both the source device 10 and the receiver device 20. An advantage of this arrangement is that the same enabling device 30 can be used to enable communication from a number of different source devices 10 to one or more receiver devices 20 (typically at different times, though in principle possibly at substantially the same time). In other examples, the enabling device 30 may be associated with or formed integrally with a source device 10 (e.g. as a component of the source device 10). In yet other examples, the enabling device 30 may be associated with or formed integrally with a receiver device 20 (e.g. as a component of the receiver device 20).

Similarly, the light source 40 in the example shown is a discrete light source. In other examples, the light source 40 may be associated with or formed integrally with a source device 10 (e.g. as a component of the source device 10). In the case that the light source 40 is a discrete light source 40, the light source 40 may be the Sun in some applications. In other examples, whether the light source 40 is a discrete light source 40 or is for example associated with or formed integrally with a source device 10, the light source 40 may be for example an electrically powered light source, such as for example an incandescent light bulb or lamp, a fluorescent tube or lamp, an LED (light emitting diode), etc. In general, the light source 40 may emit visible light or light of other, non-visible wavelengths.

The enabling device 30 has a base portion 31 which contains a processor and data storage 32, etc. The enabling device 30 further has a motor (not shown), which may be an electric motor. The enabling device 30 may have a battery, which may be a rechargeable or non-rechargeable battery, and/or access to some other electrical power supply, for powering the electric motor.

The enabling device 30 has a rotor 33 connected to the motor via a shaft 34 such that the motor is able to drive rotation of the rotor 33. The rotor 33 will be discussed further below with particular reference to Figure 2.

The enabling device 30 has a communications interface 35 which allows the enabling device 30 to receive communications from the source device 10. The communications interface 35 may allow for a wired connection with the source device 10. Alternatively or additionally, the communications interface 35 may allow for a wireless connection with the source device 10. Depending on the specific application and type of connection used, the communications may use for example a serial communications protocol. Depending on the specific application and type of connection used, the communications may use for example UART (Universal Asynchronous Receiver-Transmitter), I²C (Inter-Integrated Circuit), SPI (Serial Peripheral Interface), WiFi, Bluetooth, ZigBee, etc.

The source device 10 in this example has a processor 11 and data storage 12, which may for example include non-volatile data storage and a volatile memory. The source device 10 has a communications interface 13. The communications interface 13 corresponds to the communications interface 35 of the enabling device 30. The source device 10 may have a number of different types of communications interface 13 so as to be able to communicate with enabling devices 30 that have corresponding different communications interfaces 37. In examples where the enabling device 30 is provided separately of the source device 10, the communications interfaces 13, 35 are most conveniently wireless interfaces to enable wireless communication.

The receiver device 20 in this example has a processor 21 and data storage 22, which may for example include non-volatile data storage and a volatile memory. The receiver device 20 has a light sensor 23 for receiving light emitted by the light source 40. The specific type of light sensor 23 used may depend on the specific light source 40 that is used. The light sensor 23 is sensitive to different levels of incident light intensity, that is, the light sensor 23 is able to provide an output that is a function of the incident light intensity. The light sensor 23 may be for example a photoresistor or light-dependent resistor. In some applications, there may be plural light sensors 23.

Referring to Figure 2, the rotor 33 has at least two transparent regions 36 through which light emitted by the light source 40 can pass. The remainder of the rotor 33 is opaque, or at least substantially opaque, to the light emitted by the light source 40. The rotor 33 has a central through hole 37 enabling the rotor 33 to be fixed to the motor shaft 34.

The two transparent regions 36 differ in at least one of size and shape. Most conveniently and simply, the two transparent regions 36 have a different size, that is a different cross-sectional area, and so pass different amounts of light when the rotor 33 is illuminated by the light source 40.

In short, when the source device 10 has data to send to the receiver device 20, the source device 10 causes the motor of the enabling device 30 to rotate the rotor 33 of the enabling device 30 in such a way as to effectively modulate the light that is received at the receiver device 20 from the light source 40 in accordance with the data. In particular, as the rotor 33 rotates, the light 41 emitted by the light source 40 towards the receiver device 20 is selectively blocked by the opaque main body or passes through one of the two transparent regions 36 to the light sensor 23. The light sensor 23 of the receiver device 20 detects the differences in light intensity over time and passes corresponding outputs to the processor 21 of the receiver device 20. The processor 21 of the receiver device 20 can then demodulate the varying outputs to obtain the data.

In an example, the receiver device 20 may be arranged so that when no light is received, such as when the opaque main body of the rotor 33 is blocking light, this is taken to mean that no data is being transmitted; if a high intensity of light is received, such as when light has passed through a larger of the transparent regions 36, this is taken to mean that a first character is being transmitted, which may for example be treated as a digital **1**; and if a low light intensity of light is received, such as when light has passed through a smaller of the transparent regions 36, this is taken to mean that a second character is being transmitted, which may for example be treated as a digital **0** (or vice versa). In this regard, the light sensor 23 may be located so that it only receives light that has passed through one of the transparent regions 36 at a time. Alternatively or additionally, the light source 40 and the rotor 33 may be arranged so that light from the light source 40 only passes through one of the transparent regions 36 at a time. This is indicated schematically in Figure 1 by only light rays 41 that are towards the upper part of the figure being (selectively) passed to the receiver device 20 and the light sensor 23 correspondingly being located towards the upper part of the receiver device 20 (it being understood that these physical locations are only figurative).

Accordingly, the source device 20 can effectively transmit data to the receiver device 20 using light but without requiring the light source 40 itself to be controlled to modulate the light that is emitted by the light source 40. The light source 40 can simply be "on", at least when data is to be transmitted.

The light sensor 23 may provide an output corresponding to a "high" light intensity if the received light intensity is above a threshold and may provide an output corresponding to a "low" light intensity if the received light intensity is below the threshold but above another, lower threshold (which may be zero, corresponding to no light having been received). The thresholds may be set manually by a user during some configuration or testing phase. Alternatively or additionally, the thresholds may be set automatically at the receiver device 20 based on the intensity of the ambient light when the enabling device 30 is not operating or present, again during for example some configuration or testing phase.

An indication that data is to be transferred may be provided by providing some specific pattern of light intensity, i.e. some specific rotation of the rotor 33, prior to transfer of the data itself, which is known to the receiver device 20.

In the case that the light source 40 can be switched on and off, in an example the source device 20 may first transmit a command to the light source 40 to switch the light source 40 on prior to causing the rotor 33 to be rotated as required.

The signal that is sent by the source device 10 to the enabling device 30 may take a number of different basic forms. For example, the source device 10 may be arranged to send a motor control signal to the enabling device 30 in which the motor control signal is generated by the source device 10 in accordance with the control of rotation of the rotor 33 that is required in order to cause the required blocking and selective transmission of the light 41 by the transparent regions 36. As another example, the source device 10 may transmit the data itself to the enabling device 30, and the enabling device 30 then generates the corresponding motor control signal to cause the rotor 33 to rotate as required. This second example is likely to be more convenient in many cases as it requires less adaptation of source devices 10, which simply need to be able to transmit data in accordance with any appropriate communications control. Either way, the motor control signal is effectively modulated so as to cause the rotor 33 to rotate in accordance with the data to be transmitted to the receiver device 20.

In an example, the modulation is on-off keying modulation, which is a simple form of amplitude-shift keying (ASK) modulation that can be used to represent digital data. Other, more complex modulation with correspondingly more complex blocking or attenuation of the light 41 may be used in other examples.

The source device 10 may be a user device, such as a computer, smart phone, etc. In other examples, the source device 10 may be an IoT device. In general, as used herein, an IoT device is a device that has an addressable interface (e.g. an Internet protocol (IP) address, a Bluetooth identifier (ID), a near-field communication (NFC) ID, etc.) and can transmit information to one or more other devices over a wired or wireless connection. IoT devices may in general include or be incorporated in for example refrigerators, ovens, microwaves, freezers, dishwashers, clothes washing machines, clothes dryers, furnaces, air conditioners, thermostats, televisions and other consumer electronic devices, light fixtures, vacuum cleaners, sprinklers, electricity meters, gas meters, etc. IoT devices may be deployed in locations or situations where there is no mains powers supply or the IoT device may not suitable for a mains power supply, including in for example the case that the IoT device is a sensor for temperature, humidity, pressure, light levels, pollution levels, etc.

The receiver device 20 may likewise be a user device, such as a computer, smart phone, IoT device, etc.

As mentioned, the enabling device 30 may be associated with or formed integrally with a source device 10 (e.g. as a component of the source device 10). In such a case, the integrated source device/enabling device 10/30 may have an input device by which a user can manually input data that is to be communicated to a receiver device 20. Such an input device may be for example a keyboard, a touchscreen, etc. The integrated source device/enabling device 10/30 may for example receive text input and convert them to ASCII (American Standard Code for Information Interchange) characters. The rotor 33 may then be caused to rotate in order to convey the ASCII characters to the receiving device 20. To illustrate this, ASCII codes for the three letters **e, f, g** are shown as Table 1 below:

**Table 1**

| Char | ASCII Decimal | ASCII Hex | ASCII Binary |
|---|---|---|---|
| e | 101 | 0x65 | 01100101 |
| f | 102 | 0x66 | 01100110 |
| g | 103 | 0x67 | 01100111 |

So, for example, to transmit the character **e,** it is necessary to transmit the eight bits of the byte 01100101 in sequence. To achieve this, the rotor 33 is caused to rotate such that in successive time slots, the duration of which is known to the receiver device 20, light is transmitted by say the smaller transparent region 36 to convey the first **0,** light is transmitted by the larger transparent region 36 to convey the first **1,** light is transmitted by the larger transparent region 36 to convey the second **1,** etc.

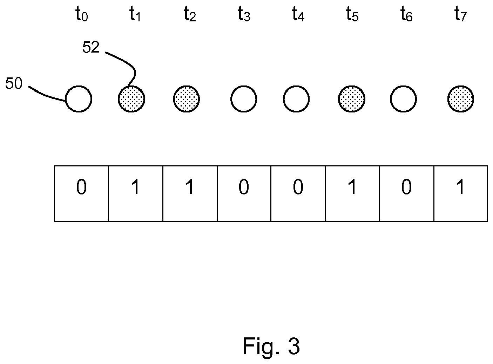

This is illustrated in Figure 3, showing eight time intervals to to t₇ over which the eight bits for the ASCII character **e** are transmitted. At the first time interval to, a **0** is to be transmitted. Accordingly, the rotor 33 of the device 30 is rotated as necessary so that light 41 passes through the smaller transparent region 36 to convey the first **0** as indicated by an empty circle 50 in the drawing. In the next time interval ti, a **1** is to be transmitted. Accordingly, the rotor 33 of the device 30 is rotated as necessary so that light 41 passes through the larger transparent region 36 to convey the **1** as indicated by a shaded circle 52 in the drawing. This is repeated for the subsequent bits of the byte to be transmitted.

For other characters, such as Turkish or Greek characters or other special characters, two or more bytes may be transmitted, similarly to a UTF-8 (Unicode Transformation Format - 8) system.

As mentioned, there may be only two transparent regions 36 for selectively passing different intensities of light to convey two different characters. Alternatively, there may be more than two transparent regions 36 for selectively passing different intensities of light. Using more than two transparent regions 36 can enable faster transfer of data. For example, there may be two or more pairs of transparent regions 36 of different size and shape that are diametrically opposed within each pair. This enables a corresponding increase in data transfer rate to be achieved.

In the example above, the two transparent regions 36 have basically the same shape but have different sizes, which means that they pass different amounts of light. This enables the detection and demodulation on the receiver side to be relatively straightforward as the receiver device 20 only needs to be able to discriminate different intensities of received light. However, the transparent regions 36 may have different shapes, in addition to or instead of having different sizes. A different shape means that the pattern of light passing through the transparent regions 36 and received by the receiver device 20 over time as the rotor 33 rotates may be different. The different patterns of light received over time by the receiver device 20 as the light passes through differently shaped transparent regions 36 may be used to convey different characters from the source device 10 to the receiver device 20.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A device (30) for enabling light communication of data from a source device (10) to a receiver device (20), the device (30) comprising: a rotor (33) having at least two transparent regions (36) through which light emitted by a light source (40) can pass towards the receiver device (20), the transparent regions (36) having at least one of a different size and a different shape, the remainder of the rotor (33) being opaque;
and a drive arrangement for driving rotational movement of the rotor (33);
the device (30) being arranged so that as the drive arrangement rotates the rotor (33), light emitted by said light source (40) is selectively blocked and selectively allowed to pass through the at least two transparent regions (36) in accordance with the data to be communicated from a said source device (10) to a said receiver device (20), whereby a first data character can be represented by light passing through one of the transparent regions (36) and a second data character can be represented by light passing through the or another of the transparent regions (36) having at least one of a different size and a different shape.

2. A device according to claim 1, comprising exactly two transparent regions.

3. A device according to claim 1 or claim 2, wherein the two transparent regions are arranged on the rotor to be diametrically opposed to each other.

4. A device according to any of claims 1 to 3, comprising a wireless communications interface for receiving signals from a source device wirelessly.

5. A device according to any of claims 1 to 4, comprising a wired communications interface for receiving signals from a source device over a wired connection.

6. A device according to any of claims 1 to 5, the device being arranged to receive from a said source device data to be communicated from a said source device to a receiver device, the device comprising a controller arranged to receive the data, to obtain a drive signal in accordance with the received data, and to control the drive arrangement in accordance with the drive signal.

7. A device according to any of claims 1 to 6, the device being arranged to receive a drive signal from a source device in which the drive signal is modulated in accordance with the data to be sent, and to control the drive arrangement in accordance with the drive signal.

8. A method of communicating data from a source device to a receiver device, the method comprising:
rotating a rotor having at two least transparent regions through which light emitted by the light source can pass towards the receiver device, the transparent regions having at least one of a different size and a different shape for allowing different amounts of light to pass, the remainder of the rotor being opaque;
receiving at the receiver device light that has passed through the at two least transparent regions; and
decoding at the receiver device the light received at the receiver device, whereby a first data character is represented by light passing through one of the transparent regions and a second data character is represented by light passing through the or another of the transparent regions having at least one of a different size and a different shape.

9. A method according to claim 8, wherein the rotor comprises exactly two transparent regions.

10. A method according to claim 8 or claim 9, wherein the two transparent regions are arranged on the rotor to be diametrically opposed to each other.

11. A method according to any of claims 8 to 10, wherein the rotor is provided on a device having a controller for controlling rotation of the rotor.

12. A method according to claim 11, comprising the source device transmitting to the controller the data to be communicated from the source device to the receiver device, the controller being arranged to receive the data, to obtain a drive signal in accordance with the received data, and to control the drive arrangement in accordance with the drive signal.

13. A method according to any of claims 8 to 12, the device being arranged to receive a drive signal from the source device in which the drive signal is modulated in accordance with the data to be sent, and to control the drive arrangement in accordance with the drive signal.

## Patentansprüche

1. Vorrichtung (30) zum Ermöglichen der Datenübertragung mittels Licht von einer Quellenvorrichtung (10) zu einer Empfängervorrichtung (20), wobei die Vorrichtung (30) Folgendes aufweist:
einen Rotor (33), der wenigstens zwei transparente Regionen (36) hat, durch welche von einer Lichtquelle (40) ausgestrahltes Licht zur Empfängervorrichtung (20) hin durchstrahlen kann, wobei die transparenten Regionen (36) eine verschiedene Größe und/oder eine verschiedene Form haben, wobei der Rest des Rotors (33) opak ist; und
eine Antriebsanordnung zum Antreiben der Drehbewegung des Rotors (33);
wobei die Vorrichtung (30) so angeordnet ist, dass beim Drehen des Rotors (33) durch die Antriebsanordnung von der genannten Lichtquelle (40) ausgestrahltes Licht selektiv blockiert wird und selektiv durch die wenigstens zwei transparenten Regionen (36) gemäß den von einer genannten Quellenvorrichtung (10) zu einer genannten Empfängervorrichtung (20) zu übermittelnden Daten durchgelassen wird, so dass ein erstes Datenzeichen von durch eine der transparenten Regionen (36) durchstrahlendem Licht repräsentiert werden kann und ein zweites Datenzeichen von durch die oder eine andere der transparenten Regionen (36), die eine verschiedene Größe und/oder eine verschiedene Form hat, durchstrahlendem Licht repräsentiert werden kann.

2. Vorrichtung nach Anspruch 1, die genau zwei transparente Regionen aufweist.

3. Vorrichtung nach Anspruch 1 oder Anspruch 2, wobei die zwei transparenten Regionen am Rotor so angeordnet sind, dass sie einander diametral entgegengesetzt sind.

4. Vorrichtung nach einem der Ansprüche 1 bis 3, die eine Schnittstelle für drahtlose Datenübertragung zum drahtlosen Empfangen von Signalen von einer Quellenvorrichtung aufweist.

5. Vorrichtung nach einem der Ansprüche 1 bis 4, umfassend eine Schnittstelle für kabelgebundene Datenübertragung zum Empfangen von Signalen von einer Quellenvorrichtung über eine drahtgebundene Verbindung.

6. Vorrichtung nach einem der Ansprüche 1 bis 5, wobei die Vorrichtung zum Empfangen von Daten, die von einer genannten Quellenvorrichtung zu einer Empfängervorrichtung zu übermitteln sind, von einer genannten Quellenvorrichtung angeordnet ist, wobei die Vorrichtung einen Steuerteil aufweist, der zum Empfangen der Daten, zum Erhalten eines Ansteuersignals gemäß den empfangenen Daten und zum Steuern der Antriebsanordnung gemäß dem Ansteuersignal angeordnet ist.

7. Vorrichtung nach einem der Ansprüche 1 bis 6, wobei die Vorrichtung zum Empfangen eines Ansteuersignals von einer Quellenvorrichtung, in der das Ansteuersignal gemäß den zu sendenden Daten moduliert wird, und zum Steuern der Antriebsanordnung gemäß dem Ansteuersignal angeordnet ist.

8. Verfahren zur Übertragung von Daten von einer Quellenvorrichtung zu einer Empfängervorrichtung, wobei das Verfahren Folgendes aufweist:
Drehen eines Rotors mit wenigstens zwei transparenten Regionen, durch welche von der Lichtquelle ausgestrahltes Licht zur Empfängervorrichtung hin durchstrahlen kann, wobei die transparenten Regionen eine verschiedene Größe und/oder eine verschiedene Form haben, um verschiedene Lichtmengen durchzulassen, wobei der Rest des Rotors opak ist;
Empfangen von Licht an der Empfängervorrichtung, das durch die wenigstens zwei transparenten Regionen hindurchstrahlte; und
an der Empfängervorrichtung Decodieren des an der Empfängervorrichtung empfangenen Lichts, so dass ein erstes Datenzeichen von durch eine der transparenten Regionen durchstrahlendem Licht repräsentiert wird und ein zweites Datenzeichen von durch die oder eine andere der transparenten Regionen, die eine verschiedene Größe und/oder eine verschiedene Form haben, durchstrahlendem Licht repräsentiert wird.

9. Verfahren nach Anspruch 8, wobei der Rotor genau zwei transparente Regionen aufweist.

10. Verfahren nach Anspruch 8 oder Anspruch 9, wobei die zwei transparenten Regionen am Rotor so angeordnet sind, dass sie einander diametral entgegengesetzt sind.

11. Verfahren nach einem der Ansprüche 8 bis 10, wobei der Rotor an einer Vorrichtung vorgesehen ist, die einen Steuerteil zum Steuern der Drehung des Rotors hat.

12. Verfahren nach Anspruch 11, das das Übertragen der von der Quellenvorrichtung zur Empfängervorrichtung zu übermittelnden Daten durch die Quellenvorrichtung an den Steuerteil aufweist, wobei der Steuerteil zum Empfangen der Daten, zum Erhalten eines Ansteuersignals gemäß den empfangenen Daten und zum Steuern der Antriebsanordnung gemäß dem Ansteuersignal angeordnet ist.

13. Verfahren nach einem der Ansprüche 8 bis 12, wobei die Vorrichtung zum Empfangen eines Ansteuersignals von der Quellenvorrichtung, in der das Ansteuersignal gemäß den zu sendenden Daten moduliert wird, und zum Steuern der Antriebsanordnung gemäß dem Ansteuersignal angeordnet ist.

## Revendications

1. Dispositif (30) permettant la communication de données par de la lumière en provenance d'un dispositif source (10) à destination d'un dispositif récepteur (20), le dispositif (30) comportant :
un rotor (33) ayant au moins deux régions transparentes (36) au travers desquelles de la lumière émise par une source de lumière (40) peut passer en direction du dispositif récepteur (20), les régions transparentes (36) ayant au moins l'une parmi une taille différente et une forme différente, le reste du rotor (33) étant opaque ; et
un agencement d'entraînement servant à entraîner un mouvement de rotation du rotor (33) ;
le dispositif (30) étant agencé de telle sorte que l'agencement d'entraînement fait tourner le rotor (33),
la lumière émise par ladite source de lumière (40) est bloquée de manière sélective et autorisée de manière sélective à passer au travers desdites au moins deux régions transparentes (36) en fonction des données destinées à être communiquées en provenance d'un dit dispositif source (10) à destination d'un dit dispositif récepteur (20), ce par quoi un premier caractère de données peut être représenté par de la lumière passant au travers de l'une des régions transparentes (36) et un deuxième caractère de données peut être représenté par de la lumière passant au travers de l'une ou d'une autre des régions transparentes (36) ayant au moins l'une parmi une taille différente et une forme différente.

2. Dispositif selon la revendication 1, comportant exactement deux régions transparentes.

3. Dispositif selon la revendication 1 ou la revendication 2, dans lequel les deux régions transparentes sont agencées sur le rotor pour être diamétralement opposées l'une par rapport à l'autre.

4. Dispositif selon l'une quelconque des revendications 1 à 3, comportant une interface de communication sans fil servant à recevoir des signaux en provenance d'un dispositif source sans fil.

5. Dispositif selon l'une quelconque des revendications 1 à 4, comportant une interface de communication câblée servant à recevoir des signaux en provenance d'un dispositif source par une connexion câblée.

6. Dispositif selon l'une quelconque des revendications 1 à 5, le dispositif étant agencé pour recevoir en provenance d'un dit dispositif source des données destinées à être communiquées en provenance d'un dit dispositif source à destination d'un dispositif récepteur, le dispositif comportant un dispositif de commande agencé pour recevoir les données, pour obtenir un signal d'entraînement en fonction des données reçues, et pour commander l'agencement d'entraînement en fonction du signal d'entraînement.

7. Dispositif selon l'une quelconque des revendications 1 à 6, le dispositif étant agencé pour recevoir un signal d'entraînement en provenance d'un dispositif source dans lequel le signal d'entraînement est modulé en fonction des données destinées à être envoyées, et pour commander l'agencement d'entraînement en fonction du signal d'entraînement.

8. Procédé de communication de données en provenance d'un dispositif source à destination d'un dispositif récepteur, le procédé comportant les étapes consistant à :
faire tourner un rotor ayant au moins deux régions transparentes au travers desquelles de la lumière émise par la source de lumière peut passer en direction du dispositif récepteur, les régions transparentes ayant au moins l'une parmi une taille différente et une forme différente pour permettre à différentes quantités de lumière de passer, le reste du rotor étant opaque ;
recevoir au niveau du dispositif récepteur la lumière qui est passée au travers desdites au moins deux régions transparentes ; et
décoder au niveau du dispositif récepteur la lumière reçue au niveau du dispositif récepteur, ce par quoi un premier caractère de données est représenté par de la lumière passant au travers de l'une des régions transparentes et un deuxième caractère de données est représenté par de la lumière passant au travers de ladite l'une ou une autre des régions transparentes ayant au moins l'une parmi une taille différente et une forme différente.

9. Procédé selon la revendication 8, dans lequel le rotor comporte exactement deux régions transparentes.

10. Procédé selon la revendication 8 ou la revendication 9, dans lequel les deux régions transparentes sont agencées sur le rotor pour être diamétralement opposées l'une par rapport à l'autre.

11. Procédé selon l'une quelconque des revendications 8 à 10, dans lequel le rotor est mis en œuvre sur un dispositif ayant un dispositif de commande servant à commander la rotation du rotor.

12. Procédé selon la revendication 11, comportant le dispositif source qui transmet au dispositif de commande les données destinées à être communiquées en provenance du dispositif source à destination du dispositif récepteur, le dispositif de commande étant agencé pour recevoir les données, pour obtenir un signal d'entraînement en fonction des données reçues, et pour commander l'agencement d'entraînement en fonction du signal d'entraînement.

13. Procédé selon l'une quelconque des revendications 8 à 12, le dispositif étant agencé pour recevoir un signal d'entraînement en provenance du dispositif source dans lequel le signal d'entraînement est modulé en fonction des données destinées à être envoyées, et pour commander l'agencement d'entraînement en fonction du signal d'entraînement.
